# FASCICULE DE BREVET EUROPEEN

(11) **EP 2 233 665 B1**
(45) Date de publication et mention de la délivrance du brevet: **14.03.2012**
(21) Numéro de dépôt: 10151904.9
(22) Date de dépôt: 28.01.2010
(51) Int. Cl.: E04H 6/02, E04B 7/02, E04B 7/20, F24J 2/04

(54) **Construction modulaire**
Modulkonstruktion
Modular construction

(30) Priorité: 26.02.2009 FR 0951208; 11.06.2009 FR 0953864
(43) Date de publication de la demande: 29.09.2010
(73) Titulaire: Ravoyard Holding, 39380 Mont sous Vaudrey (FR)
(72) Inventeur: Ravoyard, Eric, 25000, Besancon (FR)
(74) Mandataire: Brungard, Yves Francois

(56) Documents cités:
- EP-A2- 1 624 125
- EP-A2- 1 626 140
- WO-A-2008/028677
- FR-A- 2 754 835
- US-A- 3 113 434

## Description

La présente invention concerne une construction composée d'un bâti rigide formé par au moins deux poteaux verticaux, porteurs à leur partie supérieure d'au moins deux traverses correspondantes, parallèles entre elles et reliées par au moins deux pannes transversales, perpendiculaires auxdites traverses et sur lesquelles pannes sont disposés des éléments de couverture.

Il est déjà connu de réaliser de telles constructions dans le domaine des abris anti-grêle.

En effet, la demanderesse a déjà décrit, dans ses brevets français N° 2 754 835 et N° 2 806 748, une construction de ce type, se composant d'un bâti rigide formé de deux poteaux verticaux, porteurs à leur partie supérieure d'au moins deux traverses, reliées entre elles par au moins deux pannes transversales, sur lesquelles est disposée une couverture, se présentant sous la forme d'une structure ajourée destinée à assurer une protection contre les grêlons, d'un espace au sol.

Le brevet N° 2 754 835 décrit plus précisément un dispositif de protection comportant au moins un élément de couverture souple supporté par un bâti rigide, ledit élément de couverture présentant une structure ajourée métallique, ledit bâti support comportant des pannes, reliées transversalement par des liernes, un élément de couverture étant disposé entre chaque paire de pannes et entrelacé entre les différentes liernes séparatrices.

Traditionnellement, les différents éléments constitutifs de ce type de constructions sont réalisés en atelier et amenés sur le chantier en pièces détachées, pour un assemblage s'effectuant entièrement sur place.

Ceci implique bien entendu un conditionnement particulier des pièces, une difficulté de transport et implique surtout une manutention longue et fastidieuse une fois sur le chantier, et ceci quelles que soient les conditions climatiques.

Selon une première phase de la démarche inventive, il a été cherché à rationaliser les opérations de production et de montage de telles constructions.

A cet effet, l'invention concerne une construction composée d'un bâti rigide formé par au moins deux poteaux verticaux, porteurs à leur partie supérieure d'au moins deux traverses correspondantes, parallèles entre elles et reliées par au moins deux pannes transversales, perpendiculaires auxdites traverses et sur lesquelles pannes sont disposés des éléments de couverture, caractérisée en ce que ladite construction est réalisée à partir de modules préassemblés, constitués par :
- deux traverses parallèles entre elles, entre lesquelles sont disposées perpendiculairement et fixement,
- deux pannes longitudinales d'extrémités latérales et une panne longitudinale centrale, délimitant entre elles deux intervalles,
- deux éléments de couverture disposés fixement dans les intervalles définis par les pannes,
un tel module ainsi réalisé étant destiné à être présenté et fixé d'un seul tenant à l'extrémité d'au moins deux poteaux verticaux préalablement fixés au sol, dans l'axe longitudinal du module.

On comprend bien que, de cette manière, les opérations de montage sur le chantier sont simplifiées et plus rapide car les seuls éléments à mettre en place et à assembler sont les poteaux puis les modules définis ci-dessus.

Bien entendu, ces éléments de couverture peuvent être constitués par des éléments anti-grêle, mais également par des éléments de toiture photovoltaïque.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente en perspective, un module complet selon l'invention, prêt au montage sur deux poteaux placés selon l'axe longitudinal dudit module, pour la construction d'un abri anti-grêle, cité à titre d'exemple.
La figure 2 représente une vue selon la figure 1, avant mise en place des éléments de couverture, pour une meilleure compréhension de la structure du module.
La figure 3 représente une vue d'un module selon la coupe III-III de la figure 1.
La figure 4 représente un premier exemple de réalisation d'une construction dite en T, selon l'invention.
Les figures 5 à 9 représentent les différentes étapes de montage, selon un second exemple de réalisation d'une construction quadrangulaire, selon l'invention.

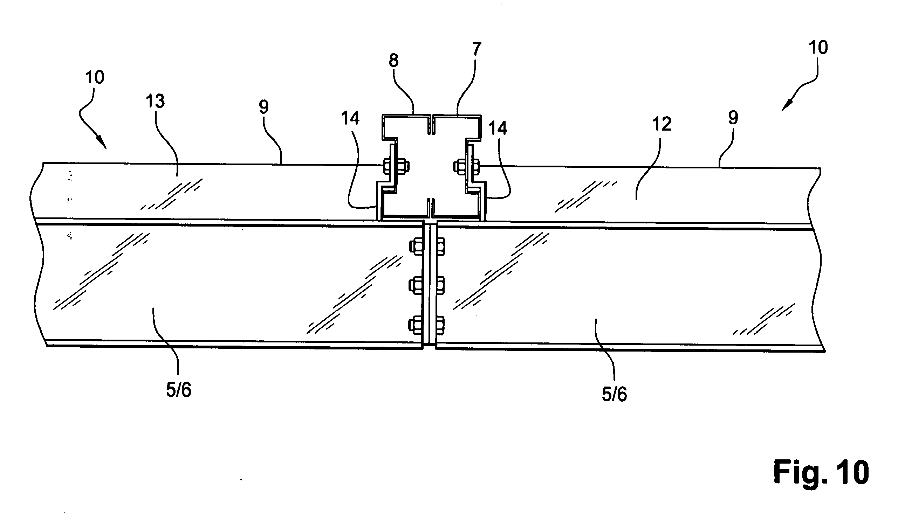

La figure 10 représente, à échelle agrandie, un détail « A » d'assemblage entre deux modules successifs, selon les figures 4 ou 7.

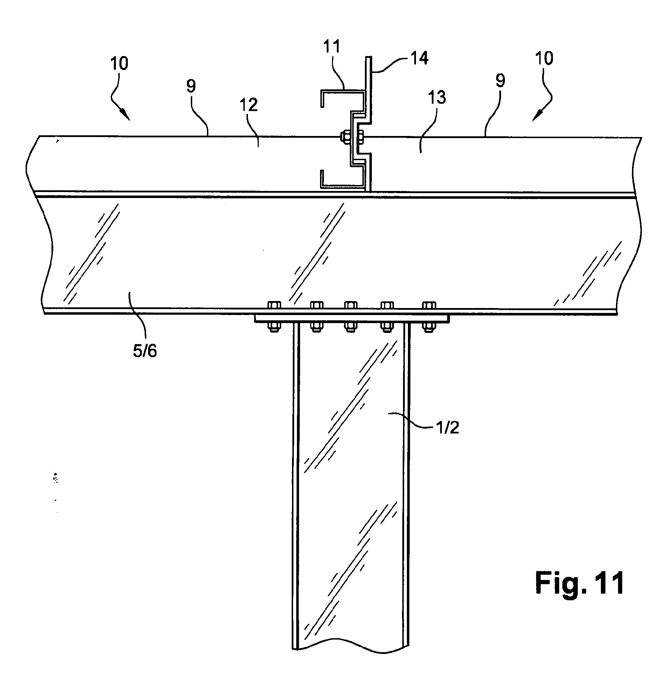

La figure 11 représente, à échelle agrandie, un détail « B » d'assemblage d'un module sur les poteaux, selon les figures 4, 6 ou 7.

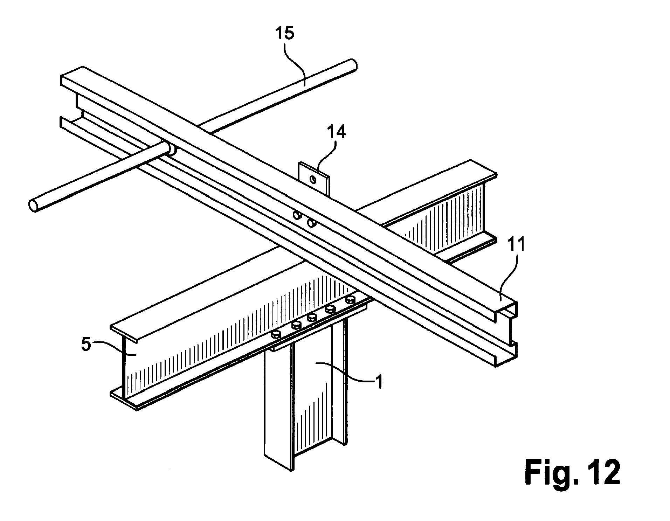

La figure 12 représente en perspective, à échelle agrandie, les positions relatives d'un poteau, d'une traverse, d'une panne et d'une lierne.

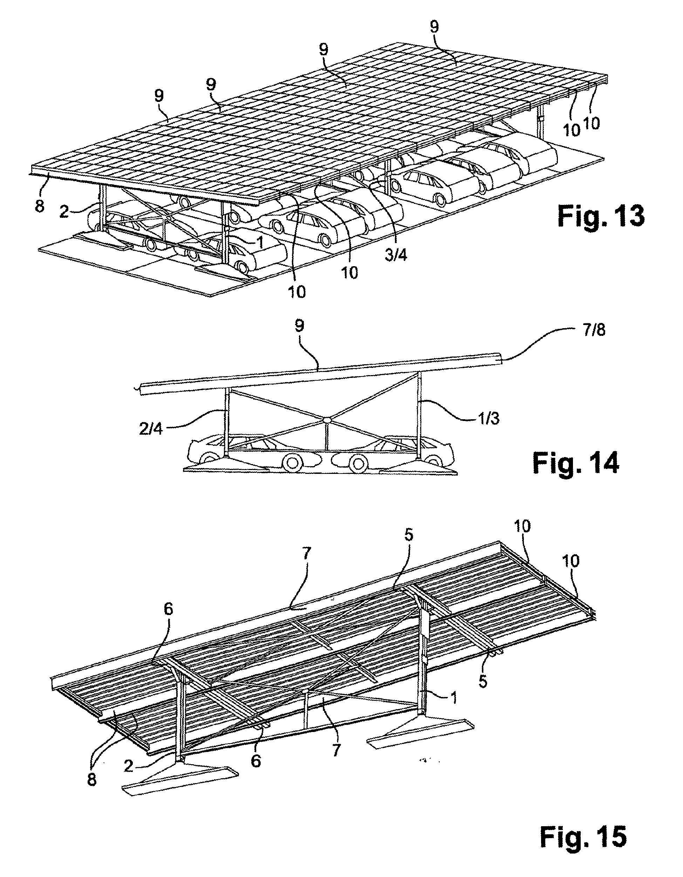

La figure 13 représente en perspective, un exemple de réalisation d'une construction modulaire à toiture photovoltaïque.
La figure 14 est une vue de côté, selon la figure 13.
La figure 15 est une vue de dessous, en perspective, d'une toiture, selon les figures 13 et 14.
Les figures 16, 17, 18 représentent, en perspective, les étapes de fabrication d'un module photovoltaïque selon l'invention, pour la réalisation de la construction selon les figures 13 à 15.
La figure 19 est une vue en coupe transversale selon la ligne VII-VII du module selon la figure 18.
La figure 20 est une vue de détails « A », à échelle agrandie, selon la figure 19.

Selon le présent exemple, la construction est composée d'un bâti rigide formé par au moins deux poteaux 1,2-3,4 verticaux, porteurs à leur partie supérieure d'au moins deux traverses correspondantes 5,6, parallèles entre elles et reliées par au moins deux pannes transversales 7,8, perpendiculaires auxdites traverses 5,6 et sur lesquelles pannes sont disposés des éléments de couverture 9.

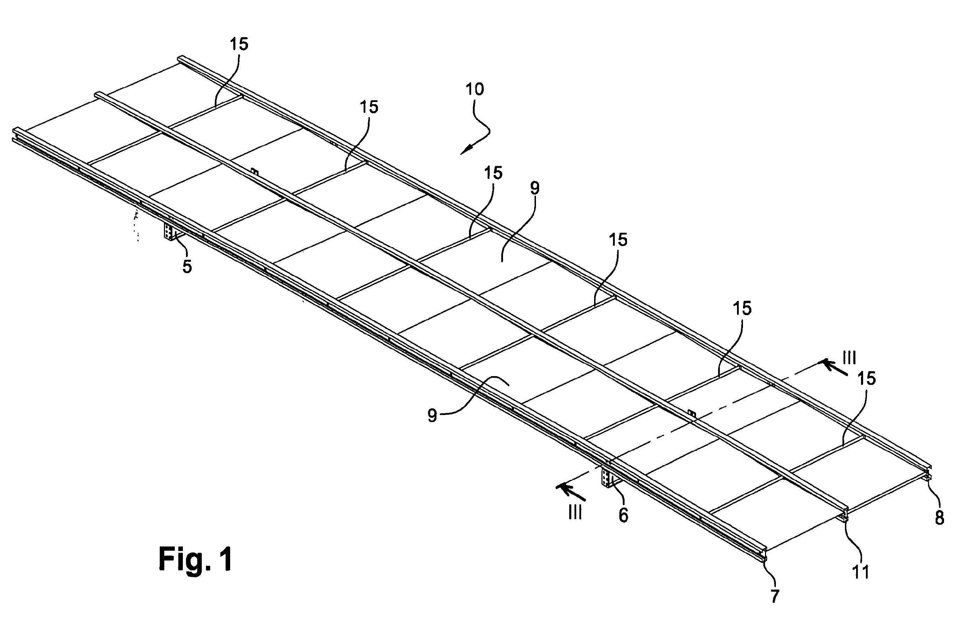

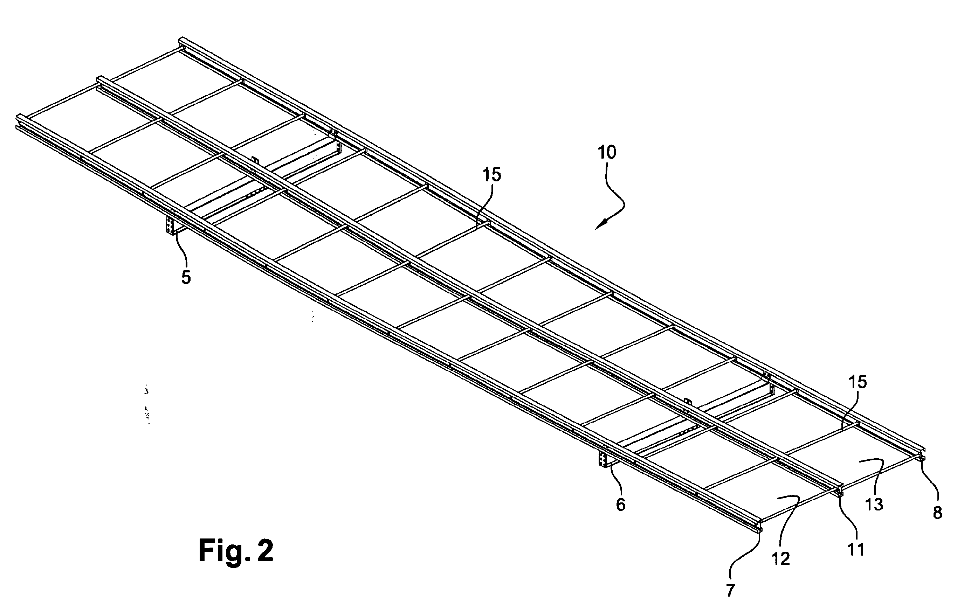

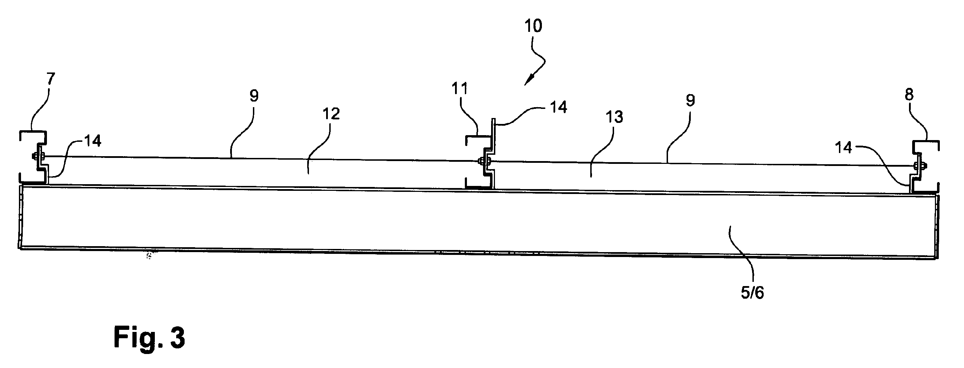

Ladite construction est réalisée à partir de modules préassemblés 10, visibles sur les figures 1, 2 et 3, constitués par :
- deux traverses 5,6 parallèles entre elles, entre lesquelles sont disposées perpendiculairement et fixement,
- deux pannes longitudinales d'extrémités latérales 7,8 et une panne longitudinale centrale 11, délimitant entre elles deux intervalles 12,13,
- deux éléments de couverture 9 disposés fixement dans les intervalles 12,13 définis par les pannes 7,8 et 11,
un tel module 10 ainsi réalisé étant destiné à être présenté et fixé d'un seul tenant à l'extrémité d'au moins deux poteaux verticaux 1,2-3,4 préalablement fixés au sol, dans l'axe longitudinal du module 10.

Les pannes 7,8 et 11 sont solidarisées des traverses 5,6 par des échantignoles 14.

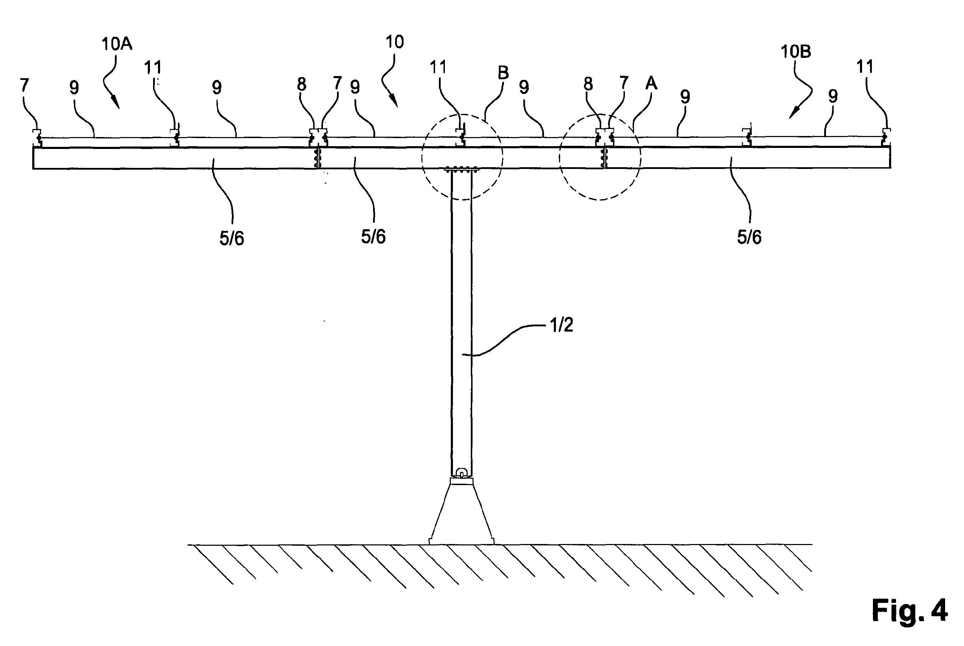

Selon l'exemple de réalisation de la figure 4, le module central 10 est supporté par les deux poteaux 1,2 dans son sens longitudinal, et il reçoit, de part et d'autre de ses côtés latéraux, un second et un troisième module 10A,10B, de manière équilibrée.

Ceci permet d'obtenir la réalisation d'une structure en T.

La construction selon l'invention comprend deux autres poteaux 3,4, disposés parallèlement aux deux premiers, également dans le sens longitudinal des modules 10, pour former un quadrilatère entre eux, chaque série de deux poteaux 1,2-3,4 étant coiffée par un module 10 mis côte à côte et fixé latéralement et directement à un module 10 de l'autre série de deux poteaux 1,2, ou par l'intermédiaire d'autres modules complémentaires 10C,10D, selon le volume de construction à obtenir.

Les éléments de couverture 9 du/des modules 10 sont formés par une structure ajourée, souple ou rigide, destinée à une protection contre les grêlons d'un espace au sol. Les éléments de couverture 9 sont entrelacés entre les liernes 15.

Egalement, les éléments de couverture 9 du/des modules 10 peuvent être formés par des éléments de toiture solaire photovoltaïque.

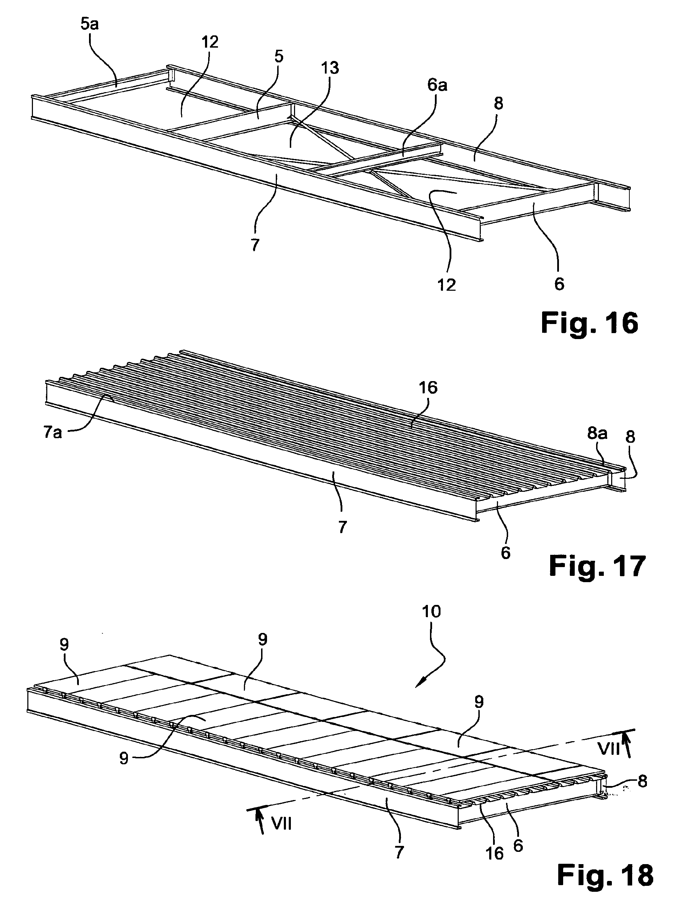

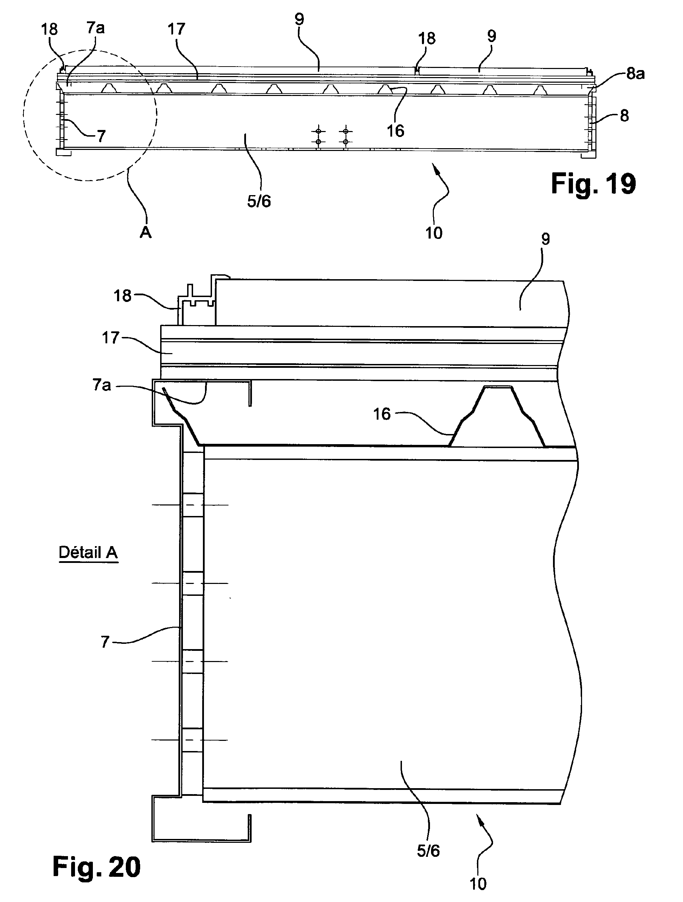

Dans ce dernier cas, la construction est réalisée à partir de modules préassemblés 10, visibles en détail sur les figures 18, 19 et 20, et constitués par :
- deux traverses 5,6 parallèles entre elles, fixées perpendiculairement par leurs extrémités, à l'intérieur de
- deux pannes longitudinales d'extrémités latérales 7,8, délimitant entre elles deux intervalles 12,13,
- un élément de protection étanche 16, fixé sur les faces supérieures des traverses 5,6 s'étendant jusqu'aux extrémités de celles-ci, situées à l'intérieur des pannes 7,8,
- une pluralité de rails transversaux 17 parallèles entre eux, disposés perpendiculairement sur les chants supérieurs 7a,8a des pannes latérales 7,8,
- une pluralité d'éléments de liaison 18 disposés sur les rails 17 et destinés à la fixation d'
- une pluralité de panneaux de couverture finale, constituée d'éléments de toiture solaire photovoltaïque 9.

Un tel module 10 ainsi réalisé est destiné à être présenté et fixé d'un seul tenant à l'extrémité d'au moins deux poteaux verticaux 1,2 préalablement fixés au sol, dans l'axe longitudinal du module 10.

Préférentiellement, les traverses 5,6 sont constituées par des éléments profilés en I entre les faces parallèles desquels sont introduites les extrémités des pannes 7,8.

Le pas entre les rails 17 et le pas entre les éléments de liaison 18 qui s'y rattachent sont prédéterminés en fonction des dimensions des éléments de toiture photovoltaïque 9 à fixer.

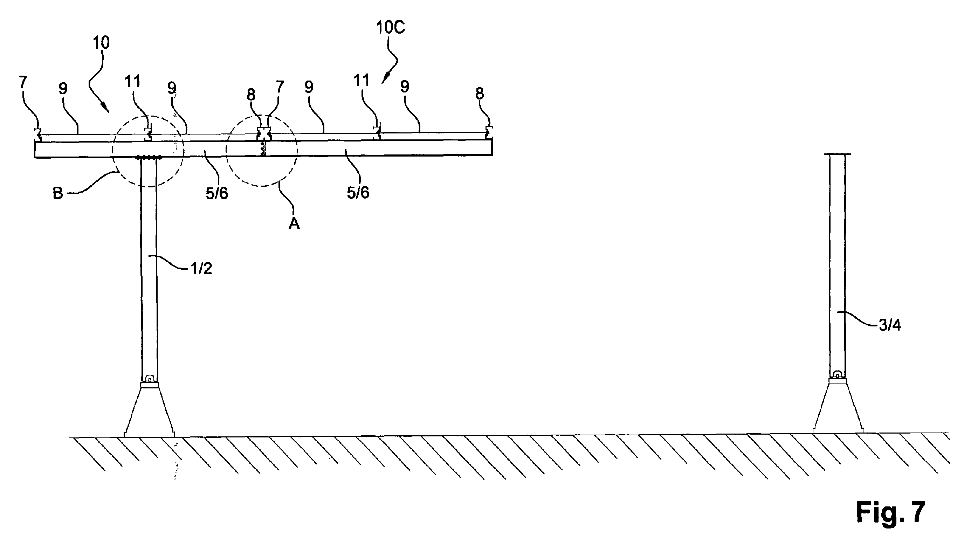

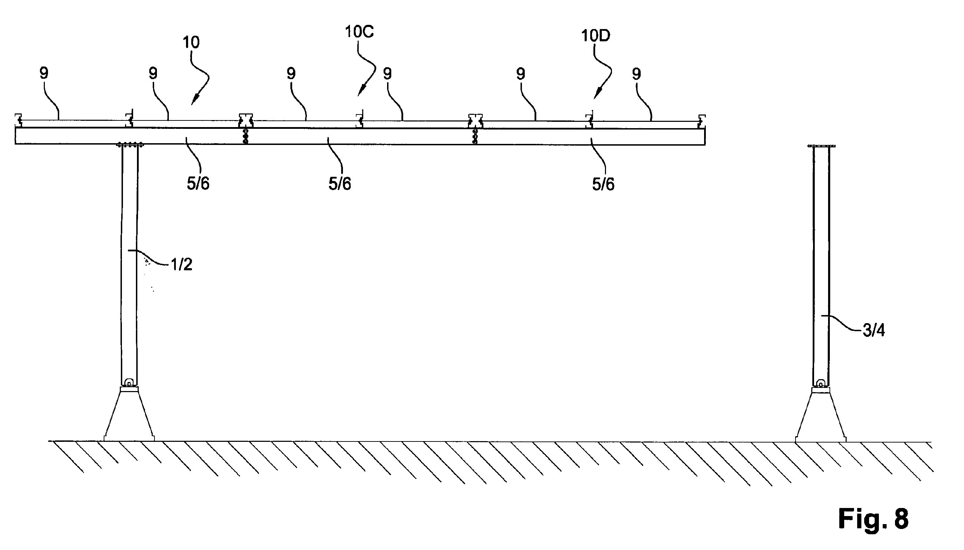

Comme on peut le voir particulièrement bien sur les figures 7 et 8, l'élément de protection étanche 16 est réaliser à partir d'une tôle nervurée, de manière telle à lui donner une rigidité, tout en assurant l'étanchéité pour la zone à protéger, ainsi qu'une sécurité au cas où les panneaux photovoltaïques viendraient à être détruits.

La réalisation des constructions qui viennent d'être décrite est remarquable par les étapes suivantes :
- mise en place de deux poteaux porteurs 1,2 dans le sens longitudinal d'un module 10,
- pose et fixation du module 10 aux extrémités supérieures des poteaux 1,2 par boulonnage ou soudage, de manière équilibrée.

Toujours selon l'exemple de la figure 4, de part et d'autre des côtés latéraux du module 10 en place sur les poteaux 1,2, sont rapportés deux autres modules 10A,10B, également par boulonnage ou soudage, pour la réalisation d'une structure en T, plus large.

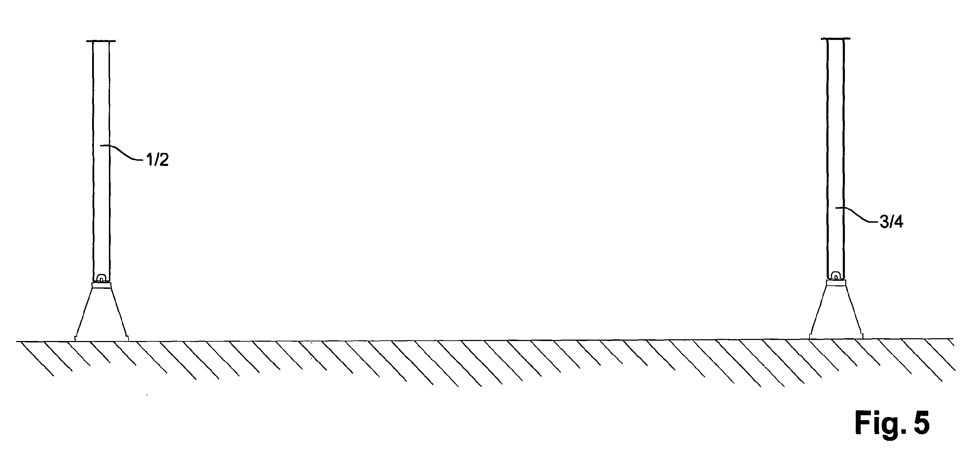

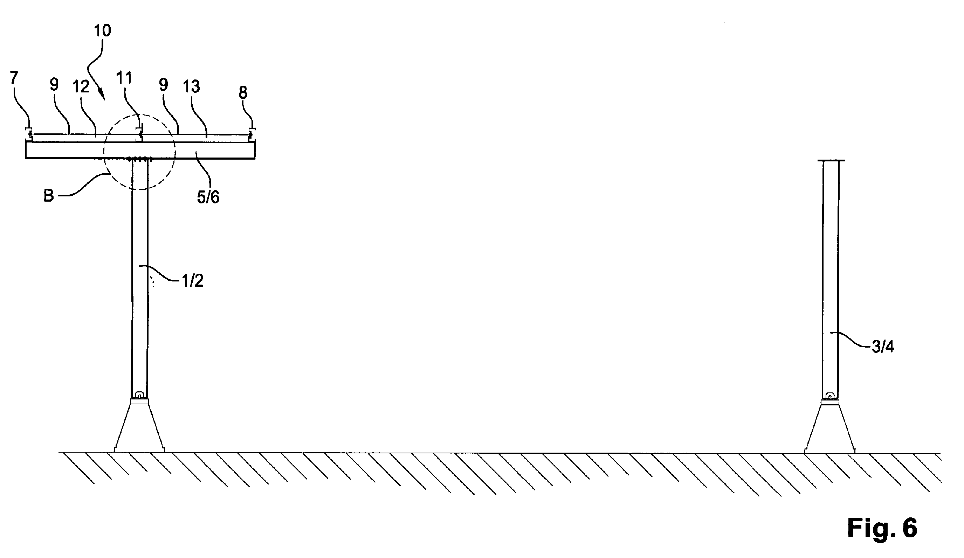

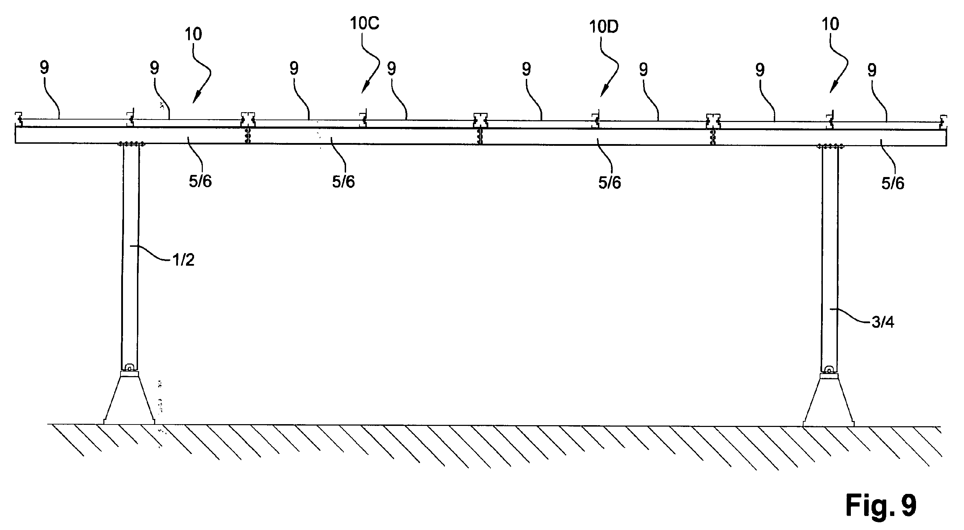

Selon l'exemple des figures 5 à 9, la réalisation de la construction est également remarquable par les étapes suivantes :
- mise en place de deux poteaux porteurs 1,2, dans le sens longitudinal d'un module d'extrémité 10 de la construction, (fig. 5)
- mise en place de deux autres poteaux 3,4 porteurs, dans le sens longitudinal d'un autre module 10, à l'autre extrémité de la construction, les quatre poteaux 1,2-3,4 s'inscrivant dans un quadrilatère, (fig. 5)
- pose et fixation d'un module 10 aux extrémités supérieures d'une première série de poteaux 1,2, par boulonnage ou soudage, de manière équilibrée, (fig. 6)
- pose et fixation d'un module 10 aux extrémités supérieures d'une seconde série de poteaux 3,4, par boulonnage ou soudage, de manière équilibrée,
- éventuellement, mise en place de modules intermédiaires 10C,10D entre les modules d'extrémité 10 en place sur les poteaux 1,2-3,4, par boulonnage ou soudage, après les avoir disposés côte à côte par leurs côtés latéraux, selon le volume de construction à obtenir. (fig. 7, 8, 9)

## Revendications

1. Construction composée d'un bâti rigide formé par au moins deux poteaux (1,2-3,4) verticaux, porteurs à leur partie supérieure d'au moins deux traverses correspondantes (5,6), parallèles entre elles et reliées par au moins deux pannes transversales (7,8), perpendiculaires auxdites traverses (5,6) et sur lesquelles pannes sont disposés des éléments de couverture (9), **caractérisée en ce que** ladite construction est réalisée à partir de modules préassemblés (10), constitués par :
- deux traverses (5,6) parallèles entre elles, entre lesquelles sont disposées perpendiculairement et fixement,
- deux pannes longitudinales d'extrémités latérales (7,8) et une panne longitudinale centrale (11), délimitant entre elles deux intervalles (12,13),
- deux éléments de couverture (9) disposés fixement dans les intervalles (12,13) définis par les pannes (7, et 11),
un tel module (10) ainsi réalisé étant destiné à être présenté et fixé d'un seul tenant à l'extrémité d'au moins deux poteaux verticaux (1,2-3,4) préalablement fixés au sol, dans l'axe longitudinal du module (10).

2. Construction selon la revendication 1, **caractérisée en ce que** le module. (10) supporté par les deux poteaux (1,2) dans son sens longitudinal, reçoit, de part et d'autre de ses côtés latéraux, un second et un troisième module (10A,10B), de manière équilibrée.

3. Construction selon l'une des revendications 1 ou 2, **caractérisée en ce qu'**elle comprend deux autres poteaux (3,4), disposés parallèlement aux deux premiers, également dans le sens longitudinal des modules (10), pour former un quadrilatère entre eux, chaque série de deux poteaux (1,2-3,4) étant coiffée par un module (10) mis côte à côte et fixé latéralement et directement à un module (10) de l'autre série de deux poteaux (1,2), ou par l'intermédiaire d'autres modules complémentaires (10C,10D), selon le volume de construction à obtenir.

4. Construction selon l'une des revendications 1 à 3, **caractérisée en ce que** les éléments de couverture (9) du/des modules (10) sont formés par une structure ajourée, souple ou rigide, destinée à une protection contre les grêlons d'un espace au sol.

5. Construction selon l'une des revendications 1 à 3, **caractérisée en ce que** les éléments de couverture (9) du/des modules (10) forment des éléments de toiture solaire photovoltaïque.

6. Construction selon la revendication 5, **caractérisée en ce que** chacun des modules photovoltaïques préassemblés (10), est constitué par :
- deux traverses (5,6) parallèles entre elles, fixées perpendiculairement par leurs extrémités, à l'intérieur de
- deux pannes longitudinales d'extrémités latérales (7,8), délimitant entre elles deux intervalles (12,13),
- un élément de protection étanche (16), fixé sur les faces supérieures des traverses (5,6) s'étendant jusqu'aux extrémités de celles-ci, situées à l'intérieur des pannes (7,8),
- une pluralité de rails transversaux (17) parallèles entre eux, disposés perpendiculairement sur les chants supérieurs (7a,8a) des pannes latérales (7,8),
- une pluralité d'éléments de liaison (18) disposés sur les rails (17) et destinés à la fixation d'
- une pluralité de panneaux de couverture finale, constituée d'éléments de toiture solaire photovoltaïque (9).

7. Construction selon la revendication 6, **caractérisée en ce que** les traverses (5,6) sont constituées par des éléments profilés en I entre les faces parallèles desquels sont introduites les extrémités des pannes (7,8).

8. Construction selon l'une des revendications 6 ou 7, **caractérisée en ce que** le pas entre les rails (17) et le pas entre les éléments de liaison (18) qui s'y rattachent sont prédéterminés en fonction des dimensions des éléments de toiture photovoltaïque (9) à fixer.

9. Construction selon l'une des revendications 6 à 8, **caractérisée en ce que** l'élément de protection étanche (16) est réaliser à partir d'une tôle nervurée, de manière telle à lui donner une rigidité, tout en assurant l'étanchéité pour la zone à protéger.

10. Procédé de réalisation d'une construction selon l'une des revendications 1 ou 2 et 4 à 9, **caractérisé en ce qu'**il est remarquable par les étapes suivantes :
- mise en place de deux poteaux porteurs (1,2) dans le sens longitudinal d'un module (10),
- pose et fixation du module (10) aux extrémités supérieures des poteaux (1,2) par boulonnage ou soudage, de manière équilibrée.

11. Procédé selon la revendication 10, **caractérisé en ce que**, de part et d'autre des côtés latéraux du module (10) en place sur les poteaux (1,2), sont rapportés deux autres modules (10A, 10B), par boulonnage ou soudage, pour la réalisation d'une structure en T.

12. Procédé selon l'une des revendications 10 ou 11 pour la réalisation d'une construction selon l'une des revendications 3 à 9, **caractérisé en ce qu'**il est remarquable par les étapes suivantes :
- mise en place de deux poteaux porteurs (1,2), dans le sens longitudinal d'un module d'extrémité (10) de la construction,
- mise en place de deux autres poteaux (3,4) porteurs, dans le sens longitudinal d'un autre module (10), à l'autre extrémité de la construction, les quatre poteaux (1,2-3,4) s'inscrivant dans un quadrilatère,
- pose et fixation d'un module (10) aux extrémités supérieures d'une première série de poteaux (1,2), par boulonnage ou soudage, de manière équilibrée,
- pose et fixation d'un module (10) aux extrémités supérieures d'une seconde série de poteaux (3,4), par boulonnage ou soudage, de manière équilibrée,
- éventuellement, mise en place de modules intermédiaires (10C,10D) entre les modules d'extrémité (10) en place sur les poteaux (1,2-3,4), par boulonnage ou soudage, après les avoir disposés côte à côte par leurs côtés latéraux, selon le volume de construction à obtenir.

## Claims

1. Construction comprising a rigid frame formed by at least two vertical posts (1, 2-3, 4), the upper parts of which bear at least two corresponding crosspieces (5, 6), parallel to each other and joined by at least two transverse purlins (7, 8) perpendicular to said crosspieces (5, 6) and on which purlins are placed the covering elements (9), **characterised in that** said construction is made up of preassembled modules (10) comprising:
- two crosspieces (5, 6) parallel to each other, between which are fixed perpendicularly,
- two longitudinal purlins with lateral extremities (7, 8) and a longitudinal central purlin (11), delimiting between them two gaps (12, 13),
- two covering elements (9) placed fixedly in the gaps (12, 13) defined by the purlins (7, 8 and 11),
such a module (10) produced in this manner being intended to be presented and affixed in one piece to the extremity of at least two vertical posts (1, 2 - 3, 4) previously affixed to the ground, in the longitudinal axis of the module (10).

2. Construction according to claim 1, **characterised in that** the module (10) supported by the two posts (1, 2) in its longitudinal direction receives a second and third module (10A, 10B) on each of its lateral sides, in a balanced manner.

3. Construction according to one of claims 1 or 2, **characterised in that** it comprises two other posts (3, 4) arranged parallel to the first two, also in the longitudinal direction of the modules (10), in order to form a quadrilateral between them, each series of two posts (1, 2-3, 4) being surmounted by a module (10) placed side by side and affixed laterally and directly to a module (10) from the other series of two posts (1, 2) or by means of other complementary modules (10C, 10D), according to the volume of construction to be obtained.

4. Construction according to one of claims 1 to 3, **characterised in that** the covering elements (9) of the module(s) (10) are formed of a structure with openings cut into it, supple or rigid, intended to protect a stretch of ground from hailstones.

5. Construction according to one of claims 1 to 3, **characterised in that** the covering elements (9) of the module(s) (10) form elements of a photovoltaic solar roof.

6. Construction according to claim 5, **characterised in that** each of the preassembled photovoltaic modules (10) is comprised of:
- two parallel crosspieces (5, 6), fixed perpendicularly by their extremities, inside
- two longitudinal purlins with lateral extremities (7, 8) delimiting two gaps between them (12, 13),
- a watertight protective element (16), affixed to the upper faces of the crosspieces (5, 6) extending to the extremities thereof, located inside the purlins (7, 8),
- a plurality of transverse rails (17), parallel to each other, arranged perpendicularly on the upper edges (7a, 8a) of the lateral purlins (7, 8),
- a plurality of linking elements (18) arranged on the rails (17) and intended to affix
- a plurality of final covering panels, constituted of photovoltaic solar roof elements (9).

7. Construction according to claim 6, **characterised in that** the crosspieces (5, 6) are constituted of elements with an I-shaped profile, between the parallel sides of which the ends of the purlins (7, 8) are introduced.

8. Construction according to one of claims 6 or 7, **characterised in that** the spacing between the rails (17) and the spacing between the linking elements (18) attached thereto are predetermined according to the dimensions of the photovoltaic roof elements (9) to be affixed.

9. Construction according to one of claims 6 to 8, **characterised in that** the watertight protective element (16) is made from a webbed sheet, such that it adds rigidity, while ensuring the watertightness of the zone to be protected.

10. Procedure for manufacturing a construction according to one of claims 1 or 2 and 4 to 9, **characterised in that** it is notable for the following steps:
- installation of two bearing posts (1, 2) in the longitudinal direction of a module (10),
- placing and affixing of the module (10) to the upper extremities of the posts (1, 2) by means of bolting or welding, in a balanced manner.

11. Procedure according to claim 10, **characterised in that** on either side of the lateral sides of the module (10) in place on the posts (1, 2) are connected two other modules (10A, 10B), by means of bolting or welding, in order to create a T-shaped structure.

12. Process according to one of claims 10 or 11 for the realisation of a construction according to one of claims 3 to 9, **characterised in that** it is notable for the following steps:
- setting up of two bearing posts (1, 2) in the longitudinal direction of an end module (10) of the construction,
- setting up of two other bearing posts (3, 4) in the longitudinal direction of another module (10), at the other end of the construction, the four posts (1, 2 - 3, 4) forming a quadrilateral,
- the placing and affixing of a module (10) to the upper extremities of a first series of posts (1, 2), by means of bolting or welding, in a balanced manner,
- the placing and affixing of a module (10) to the upper extremities of a second series of posts (3, 4), by means of bolting or welding, in a balanced manner,
- potentially, the setting up of intermediary modules (10C, 10D) between the end module (10) in place on the posts (1,2-3,4), by means of bolting or welding, having placed them side by side by their lateral sides, according to the volume of construction to be obtained.

## Patentansprüche

1. Konstruktion aus einem starren Rahmen, der aus mindestens zwei vertikalen Pfosten (1,2-3,4) gebildet ist, die an ihrem oberen Bereich mindestens zwei dazugehörige Balken (5,6) tragen, die zueinander parallel verlaufen und durch mindestens zwei Querpfetten (7,8) verbunden sind, welche senkrecht zu den Balken (5,6) stehen und auf denen Abdeckelemente (9) angeordnet sind, **dadurch gekennzeichnet, dass** die Konstruktion aus vormontierten Moduln (10) gefertigt ist, gebildet aus:
- zwei parallel zueinander stehende Balken (5,6), zwischen denen
- zwei Längspfetten (7,8) arm seitlichen Außenrand und eine Mittelpfette (11) rechtwinklig, ortsfest angeordnet sind, welche zwischen sich zwei Zwischenräume (12,13) begrenzen,
- zwei Abdeckelemente (9), die ortsfest in den durch die Pfetten (7,8 und 11) definierten Zwischenräumen (12,13) angeordnet sind,
wobei ein so gestaltetes Modul (10) geeignet ist, in einem Stück an das Ende mindestens zweier vertikaler Pfosten (1,2-3,4) angehalten und befestigt zu werden, welche zuvor in der Längsachse des Moduls (10) am Boden befestigt worden sind.

2. Konstruktion nach Anspruch 1, **dadurch gekennzeichnet, dass** das in dessen Längsrichtung durch die beiden Pfosten (1,2) abgestützte Modul (10) auf dessen beiden lateralen Seiten in ausgeglichener Weise mit einem zweiten und einem dritten Modul (10A, 108) versehen ist.

3. Konstruktion nach einem der Ansprüche 1 oder 2, **dadurch gekennzeichnet, dass** sie zwei weitere Pfosten (3,4) umfasst, welche parallel zu den ersten beiden ebenso in Längsrichtung der Moduln (10) angeordnet sind, um zwischen ihnen ein Viereck zu bilden, wobei jede Pfostenreihe (1,2-3,4) durch ein Modul (10) bedeckt ist, das Seite an Seite angeordnet und entsprechend dem zu erzielenden Konstruktionsvolumen unmittelbar seitlich oder über weitere Zusatzmoduln (10C,10D) an ein Modul (10) der anderen Reihe aus zwei Pfosten (1,2) befestigt ist.

4. Konstruktion nach einem der Ansprüche 1 bis 3, **dadurch gekennzeichnet, dass** die Abdeckelemente (9) des/der Moduln (10) durch eine durchbrochene, biegsame oder starre Struktur gebildet sind, um einen Bodenbereich vor Hagelkörnern zu schützen.

5. Konstruktion nach einem der Ansprüche 1 bis 3, **dadurch gekennzeichnet, dass** die Abdeckelemente (9) des/der Moduln (10) photovoltaische Dachbelagselemente bilden.

6. Konstruktion nach Anspruch 5, **dadurch gekennzeichnet, dass** jedes der vorgefertigten, photovoltaischen Moduln (10) durch
- zwei zueinander parallele Balken (5,6), die rechtwinklig durch ihre Enden an der Innenseite
- zweier außenseitiger Längspfetten (7,8), die zwischen sich zwei Zwischenräume (12,13) begrenzen, befestigt sind,
- ein dichtendes Schutzelement (16), das auf den Oberseiten der Balken (5,6), die sich bis zu deren Enden erstrecken und innerhalb der Pfetten (7,8) angeordnet sind, befestigt ist,
- mehrere zueinander parallel verlaufende Querleisten (17), die rechtwinklig auf den oberen Schmalseiten (7a,8a) der seitlichen Pfetten (7,8) angeordnet sind und
- mehrere auf den Leisten (17) angeordnete Verbindungselemente (18) zur Befestigung
- mehrerer Endabdeckplatten, die aus photovoltaischen Dachbelagselementen (9) gebildet sind,
gebildet ist.

7. Konstruktion nach Anspruch 6, **dadurch gekennzeichnet, dass** die Balken (5,6) aus I-Profilelementen gebildet sind, zwischen deren parallelen Flächen die Enden der Pfetten (7,8) eingeführt sind.

8. Konstruktion nach einem der Ansprüche 6 oder 7, **dadurch gekennzeichnet, dass** der Abstand zwischen den Leisten (17) und der Abstand zwischen den daran befestigten Verbindungselementen (18) entsprechend der Maße der zu befestigenden photovoltaischen Dachbelagselemente (9) vorbestimmt sind,

9. Konstruktion nach einem der Ansprüche 6 bis 8, **dadurch gekennzeichnet, dass** das dichtende Schutzelement (16) derart aus einem gerippten Blech geschaffen ist, dass es Steifigkeit erhält und zugleich die Dichtigkeit für den zu schützenden Bereich gewährleistet ist.

10. Verfahren zur Schaffung einer Konstruktion nach einem der Ansprüche 1 oder 2 und 4 bis 9, **dadurch gekennzeichnet, dass** es sich durch die folgenden Schritte auszeichnet:
- Aufstellen zweier Tragpfosten (1, 2) in Längsrichtung eines Moduls (10)
- Auflegen und Befestigen des Moduls (10) in ausgeglichener Weise an den oberen Enden der Pfosten (1,2) durch Verschrauben oder Schweißen.

11. Verfahren nach Anspruch 11 **dadurch gekennzeichnet, dass** auf beiden lateralen Seiten des auf den Pfosten (1,2) plazierten Moduls (10) in ausgeglichener Weise zwei weitere Moduln (10A, 10B) durch Verschrauben oder Schweißen angebracht werden, um eine T-Struktur zu schaffen.

12. Verfahren nach einem der Ansprüche 10 oder 11 zur Schaffung einer Konstruktion nach einem der Ansprüche 3 bis 9, **dadurch gekennzeichnet, dass** es sich durch die folgenden Schritte auszeichnet:
- Aufstellen zweier Tragpfosten (1,2) in Längsrichtung eines Moduls (10) am Ende der Konstruktion
- Aufstellen zweier weiterer Tragpfosten (3,4) in Längsrichtung eines anderen Moduls (10) am anderen Ende der Konstruktion, wobei die vier Pfosten (1,2-3,4) ein Viereck beschreiben,
- Auflegen und Befestigen eines Moduls (10) in ausgeglichener Weise an den oberen Enden einer ersten Reihe von Pfosten (1,2) durch Verschrauben oder Schweißen,
- Auflegen und Befestigen eines Moduls (10) in ausgeglichener Weise an den oberen Enden einer zweiten Reihe von Pfosten (3,4) durch Verschrauben oder Schweißen,
- gegebenenfalls, Anbringen von Zwischenmoduln (10C, 10D) zwischen den auf den Pfosten (1,2-3,4) angeordneten Endmodulen (10) durch Verschrauben oder Schweißen, nachdem sie entsprechend dem zu erzielenden Konstruktionsvolumen über ihre Lateralseiten Seite an Seite angeordnet worden sind.
